# FASCICULE DE BREVET EUROPEEN

(11) **EP 0 673 098 B1**
(45) Date de publication et mention de la délivrance du brevet: **06.05.1999**
(21) Numéro de dépôt: 95400548.4
(22) Date de dépôt: 14.03.1995
(51) Int. Cl.: H02B 13/065

(54) **Dispositif de contrôle et de commande pour ligne de transport électrique blindée**
Regelungs und Bedienungsvorrichtung für ein gekapseltes Versorgungskabel
Control and operation device for an electric metal-clad power transmission line

(30) Priorité: 16.03.1994 FR 9403058; 16.03.1994 FR 9403057
(43) Date de publication de la demande: 20.09.1995
(73) Titulaire: GEC ALSTHOM T & D SA, 75116 Paris (FR)
(72) Inventeur: Edmond, Thuries, F-69330 Meyzieu (FR)
(74) Mandataire: Gosse, Michel

(56) Documents cités:
- EP-A- 0 572 096
- WO-A-92/06385
- DE-A- 2 301 403
- DE-A- 2 538 314
- DE-A- 3 534 176
- DE-A- 3 710 488
- FR-A- 2 674 337
- PATENT ABSTRACTS OF JAPAN vol. 3, no. 92 (E-128) 4 Août 1979 & JP-A-54 071 341 (TOSHIBA) 7 Juin 1979

## Description

La présente invention se rapporte à un dispositif de commande et de contrôle pour ligne de transport électrique blindée et plus précisément à un indicateur d'écoulement de gaz destiné à équiper une telle ligne.

Elle concerne plus précisément une ligne blindée isolée au gaz sous pression comprenant une pluralité de tronçons, deux tronçons adjacents étant séparés par une jonction permettant le démontage d'un tronçon et chaque tronçon comprenant au moins une barre conductrice maintenue en place dans une enveloppe cylindrique, telle que décrite dans le brevet FR-A-2 692 084.

Une telle ligne est destinée à être installée en surface du sol ou à être enterrée.

En cas de défaillance ou de disfonctionnement, il est impératif de pouvoir intervenir sur le tronçon défectueux. Il est donc nécessaire de prévoir un dispositif de contrôle et de commande et l'invention propose un tel dispositif fiable et particulièrement simple et fiable.

Pour ce faire, chaque tronçon est équipé d'au moins une fibre optique courant d'une extrémité à l'autre du tronçon et disposée à l'intérieur de ladite enveloppe et d'un agencement de contrôle et de commande relié à ladite fibre et logé à l'intérieur de ladite enveloppe, les fibres optiques de N tronçons adjacents formant un module étant aboutées et reliées l'une à l'autre et une extrémité de ces N fibres optiques aboutées étant connectée à un poste de contrôle et de commande.

Dans le cas d'une ligne blindée dont ladite enveloppe est en acier et contient une seconde enveloppe concentrique en aluminium, l'espace entre les deux enveloppes étant maintenu d'épaisseur sensiblement constante, ladite fibre optique est contenue dans un tube de protection métallique et est disposée dans ledit espace.

Ledit agencement peut comporter au moins un capteur thermique, au moins un capteur UHF (ultra haute fréquence) de détection des décharges partielles, au moins une fibre optique fluorescente de détection des effluves lumineuses et au moins un indicateur d'écoulement de gaz diélectrique entre un tronçon où règne une pression PA et un tronçon où règne une pression PB.

L'invention concerne un indicateur d'écoulement de gaz destiné à être utilisé dans un tel dispositif.

Il est monté dans une ouverture traversant une paroi séparant les deux tronçons et il comporte un boîtier fixe et un organe coulissant dans ce boîtier, le coulissement de cet organe étant provoqué lorsqu'une des pressions PA ou PB est supérieure à l'autre, entraînant l'ouverture d'un passage de l'un des tronçons vers l'autre et actionnant un organe de détection du sens d'écoulement du gaz entre les tronçons.

Selon un mode de réalisation préféré, l'organe coulissant est cylindrique relié à une membrane élastique annulaire l'entourant et solidaire du boîtier, un passage communiquant avec le tronçon débouchant dans une chambre fermée sur une face de la membrane et un passage communiquant avec l'autre tronçon débouchant dans une chambre fermée sur l'autre face de la membrane.

Avantageusement, le boîtier et l'organe coulissant sont pourvus d'orifices agencés de telle sorte que, lorsque l'organe est coulissé par l'intermédiaire de la membrane dans un sens, le gaz peut passer dans le même sens d'un tronçon à l'autre.

De préférence, l'organe coulissant supporte deux tiges traversant le boîtier, chacune faisant saillie dans un des tronçons et actionnant un micro interrupteur de détection.

L'invention concerne également un dispositif de détection de fuite de gaz pour une ligne blindée isolée au gaz sous pression comprenant une pluralité de tronçons, deux tronçons adjacents étant séparés par une jonction permettant le démontage d'un tronçon.

Les documents DE-A-2 301 403 et DE-A-2 538 314 décrivent un dispositif de détection de fuite de gaz du genre mentionné ci-dessus.

Un compteur de débit installé à au moins une extrémité de modules constitués de N tronçons est relié à une alimentation en gaz,
un indicateur d'écoulement de gaz comme précisé ci-dessus est installé sur chaque tronçon.

L'invention concerne enfin un procédé de détection de fuite de gaz à l'aide d'un tel dispositif de détection.

Il consiste
à surveiller le(s) compteur(s) de débit de chaque module et, en cas de lecture d'une augmentation anormale du débit provenant de l'alimentation dans un module,
à détecter les indications des indicateurs d'écoulement de ce module, le tronçon défaillant étant compris entre les deux indicateurs d'écoulement signalant une indication différente.

L'invention est exposée ci-après plus en détail à l'aide de figures représentant un mode préféré de réalisation de l'invention.

La figure 1A est une vue en coupe transversale d'une ligne pourvue du dispositif de contrôle et de commande.

La figure 1B est une vue en coupe transversale détaillée.

La figure 2 représente en coupe axiale les extrémités de deux tronçons de ligne pourvue du dispositif de contrôle et de commande, en position assemblée.

Les figure 3 et 4 sont des vues en coupe longitudinale partielle d'un indicateur d'écoulement de gaz diélectrique conforme à l'invention.

La figure 5 représente une ligne blindée équipée du dispositif de contrôle et de commande et du dispositif de détection de fuite conforme à l'invention.

Sur la figure 1A, les référence 3, 4 et 5 désignent trois conducteurs sous forme de tubes d'aluminium ou de cuivre, disposés parallèlement entre eux et logés respectivement dans les ouvertures 6, 7 et 8 de bras isolants 9, 10 et 11. Les extrémités des bras sont maintenues serrées deux à deux dans des mâchoires telles que 13 et 14 constituant les extrémités d'arceaux métalliques 19, 20 et 21; les mâchoires sont serrées par des vis 12 et écrous 12A. Les extrémités des arceaux forment un triangle équilatéral renversé à base en haut et horizontale.

L'ensemble des organes supports des conducteurs forme un ensemble compact. Des enveloppes en aluminium 2 coulissent, à l'intérieur d'une enveloppe 1 en acier, sur des bandes 22 en matériau plastique ou en polymère chargé, à bas coefficient de frottement et à dureté suffisante, tel que le polytétrafluoroéthylène connu sous la marque déposée Téflon.

Les enveloppes d'aluminium 2 forment, vis-à-vis de l'enveloppe 1 en acier, un écran magnétique permettant de réduire l'échauffement dans l'enveloppe en acier.

Les bandes en Téflon permettent aux enveloppes d'aluminium 2 de glisser sur l'enveloppe en acier 1, en cas de dilatations différentes au cours du fonctionnement, et également lors du montage de la ligne.

Eventuellement, d'autres bandes de Téflon, telle que 23, placées au droit des extrémités des bras, permettent de centrer l'enveloppe d'aluminium 2 par rapport à l'enveloppe d'acier 1.

On donne aux arceaux 19, 20, 21 des profils arrondis pour assurer une bonne tenue diélectrique par rapport aux conducteurs.

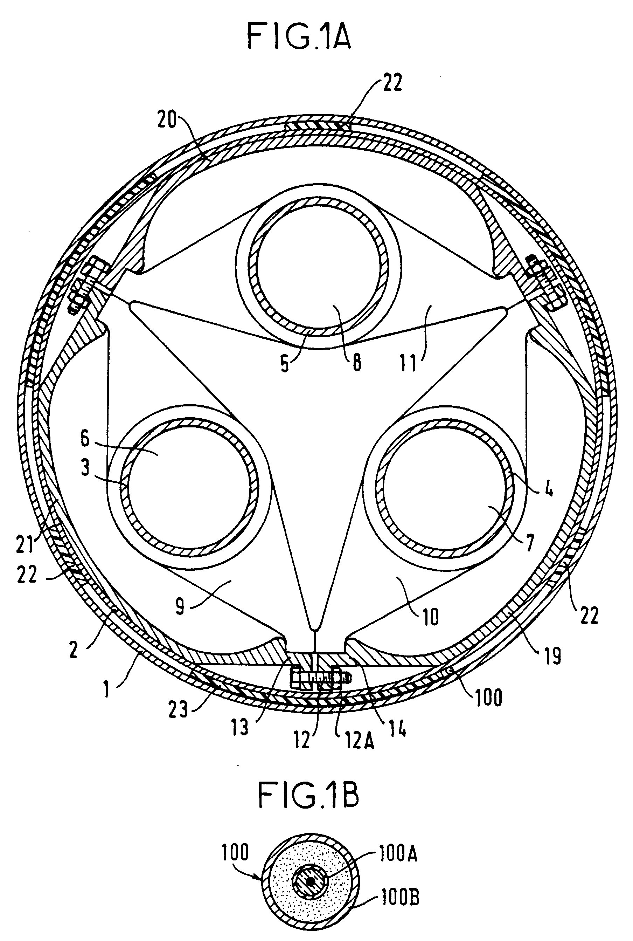

Une fibre optique 100 est disposée entre l'enveloppe d'acier 1 et l'enveloppe d'aluminium 2, dans l'espace maintenu d'épaisseur sensiblement constante par les bandes de Téflon 22, 23. Détaillée sur la figure 1B, cette fibre optique gainée de façon classique 100A est protégée par un tube métallique 100B de préférence en acier avec éventuellement un agent de remplissage. Ce tube de protection en acier 100B peut être d'un diamètre d'environ 4 mm. Plusieurs fibres optiques telle que celle représentée 100 peuvent bien évidemment être prévues.

Cette fibre 100 court d'une extrémité à l'autre d'un tronçon de ligne.

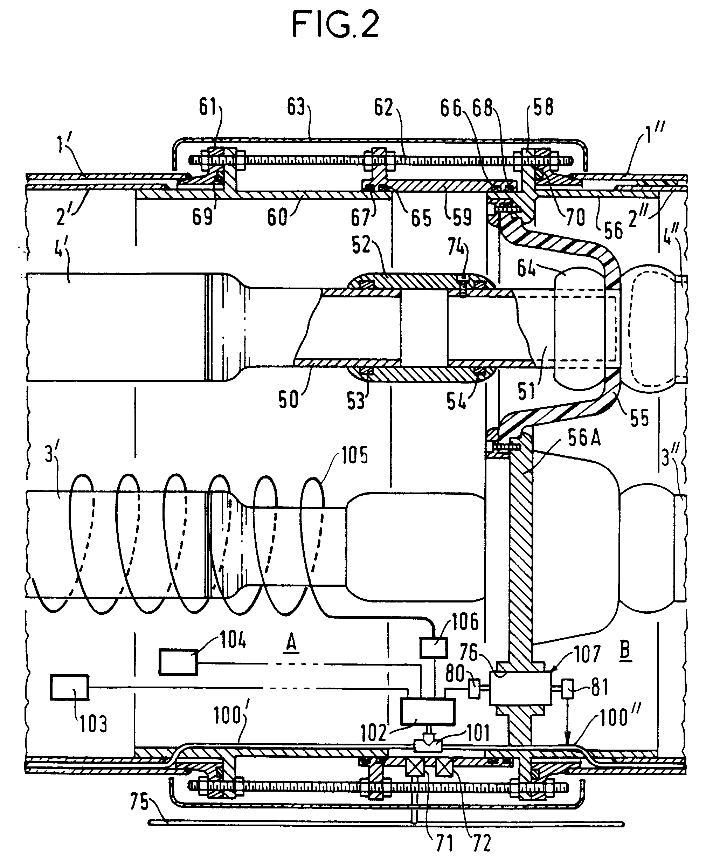

Sur la figure 2, les références 1', 2', 3', 4' désignent respectivement l'enveloppe d'acier, l'enveloppe d'aluminium et les conducteurs d'un tronçon de ligne électrique dit de gauche et les références 1", 2", 3", 4" les éléments homologues du tronçon adjacent dit de droite.

La figure 2 montre le tronçon de gauche raccordé au tronçon de droite en fonctionnement normal. On voit que les conducteurs, tel que 4' et 4", sont munis de portions d'extrémité soudées et de section rétrécie respectivement 50 et 51, et que ces portions sont reliées par un manchon de contact 52 muni de contacts glissants 53 et 54. Les conducteurs peuvent ainsi se dilater librement sans subir de déformations latérales. Le manchon 52 peut être fixé au conducteur 51 par une vis de blocage 74.

A l'enveloppe d'acier 1' est soudée une bride 61 à laquelle s'appuie un cylindre métallique 60 s'engageant dans l'enveloppe d'aluminium 2' et soudée à celle-ci.

De même, à l'enveloppe d'acier 1" est soudée une bride 58 à laquelle s'appuie un cylindre métallique 56 s'engageant dans l'enveloppe cylindrique 2", mais cette fois le cylindre 56 et l'enveloppe 2" glissent l'un par rapport à l'autre pour permettre le jeu des dilatations. Le cylindre 56 est solidaire d'une plaque transversale 56A munie de trois ouvertures sur les bords desquelles s'appuient des cônes isolants tel que le cône 55 servant de supports au conducteur 4". La plaque transversale 56A assure l'étanchéité du tronçon de droite lorsque ce dernier est séparé du tronçon de ligne de gauche.

Les cylindres 60 et 56 sont munis respectivement de contacts glissants 65 et 66 coopérant avec un cylindre conducteur 59. L'étanchéité est assurée par des joints 67, 68, 69 et 70.

Les cylindres 56, 60 et 59 sont maintenus par des tiges filetées 62 passant dans des brides appropriées; un couvercle 63 protège l'ensemble du dispositif.

Des vannes ou électrovannes de remplissage 71 de gaz isolant et de vidange 72 peuvent être installés sur le cylindre 59.

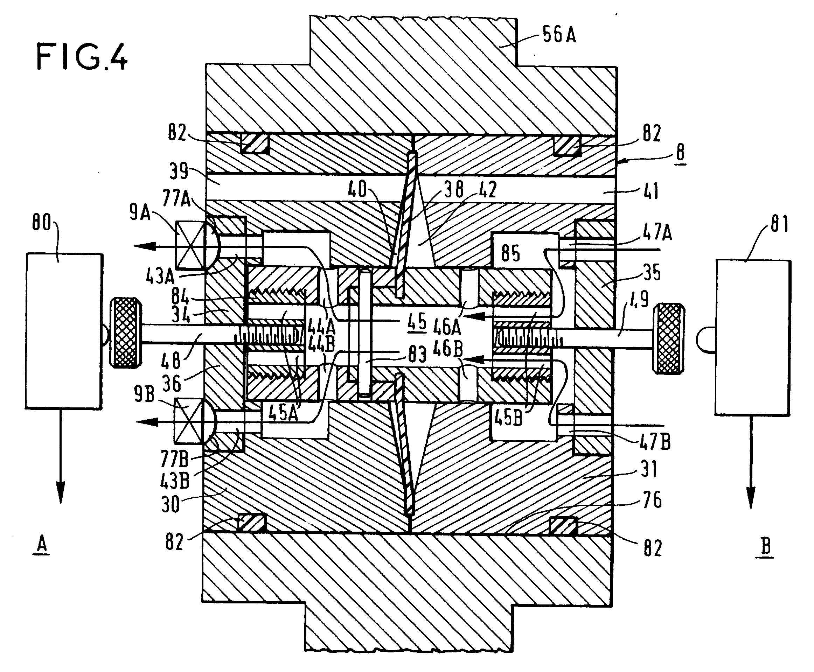

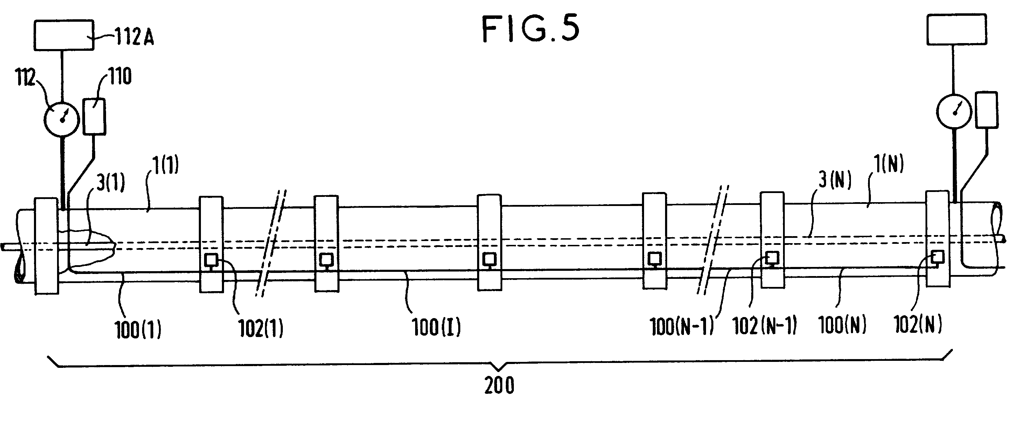

L'alimentation en gaz est assurée soit par une canalisation 75 longeant à l'extérieur les enveloppes en acier, soit en cascade à travers des filtres par l'intermédiaire d'ouvertures 76 où sont installés les indicateurs d'écoulement 107 et les valves d'isolement comme il sera décrit plus précisément en référence aux figures 4 et 5.

Le démontage s'effectue de la façon suivante: on enlève le couvercle 63, on ferme l'alimentation en gaz, on vide le gaz par la vanne 72, les conducteurs n'étant plus sous tension.

On enlève ensuite les tiges filetées 62 et on déplace le cylindre 59 par glissement vers la gauche.

On fait glisser vers la gauche le manchon de contact 52, après avoir dévissé la vis de blocage 74. On fait de même pour les deux autres phases.

Le tronçon de ligne de gauche est alors complètement déconnecté du tronçon de droite.

On notera que l'enveloppe d'aluminium peut être épaisse (10 mm environ) et être, en cas de court-circuit, traversée sans danger par le courant de court-circuit qui s'évacue à la terre par le cylindre 56, la bride 58 et le tube d'acier 1". Pour réaliser une économie notable dans la réalisation de la ligne, on peut utiliser une enveloppe d'aluminium plus mince, par exemple d'une épaisseur de 4 mm environ. Il faudra alors isoler, par une couche d'isolant non représentée sur la figure, l'enveloppe 2" du cylindre 56; le courant de court-circuit percera l'enveloppe d'aluminium et s'évacuera directement à travers l'enveloppe d'acier, sans traverser l'enveloppe d'aluminium qui ne risquera pas de s'échauffer et même de fondre.

De préférence au niveau du cylindre coulissant 59 de cette jonction entre tronçon, afin de faciliter la maintenance, est disposé l'agencement de contrôle et de commande associé à la fibre optique 100' du tronçon de gauche. Cette fibre optique 100' traverse de façon étanche le cylindre fixe 60 et est reliée par un raccord en T 101 à la fibre optique 100" du tronçon de droite traversant quant à elle le cylindre fixe 56 et la plaque transversale 56A de façon étanche. La déconnexion, en cas de maintenance ou de démontage d'un tronçon, s'effectue grâce à ce raccord en T 101. A ce raccord 101, est connecté un ensemble protégé 102 comportant un microprocesseur de traitement de données et un convertisseur de signaux.

Grâce à ce microprocesseur 102 sont traitées les données transmises par
- au moins un capteur thermique 103 afin de surveiller la température à l'intérieur du tronçon,
- au moins un capteur UHF (ultra haute fréquence) afin de détecter les éventuelles décharges partielles,
- au moins une fibre optique fluorescente 105 ou équivalent afin de détecter les éventuelles effluves lumineuses en particulier en cas d'apparition d'arc interne, les signaux lumineux transmis par cette fibre fluorescente 105 étant transformés par un convertisseur 106,
- au moins un détecteur de fuite de gaz diélectrique disposé dans un ensemble 107.

Pour une telle ligne blindée, une valeur admissible de fuite est normalisée et il importe de surveiller les fuites afin de remplacer le tronçon défaillant en cas de dépassement de cette valeur normalisée.

Avantageusement, la détection de fuite est réalisée à l'aide de l'indicateur d'écoulement du gaz qui est associé à une valve d'isolement commandé par le microprocesseur 102, lorsqu'un signal adéquat est transmis par les fibres optiques aboutées 100.

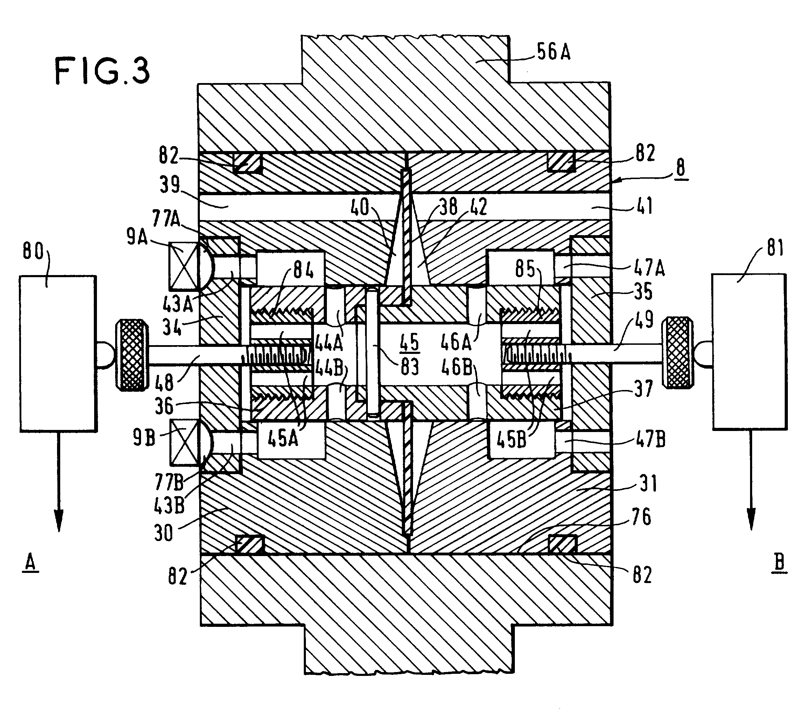

Les figures 3 et 4 représentent un exemple de réalisation d'un indicateur d'écoulement 107 pouvant être avantageusement utilisé.

Sur la paroi 56A d'étanchéité de chaque jonction, séparant un tronçon A d'un tronçon adjacent B, est monté un indicateur d'écoulement 107. Cet indicateur d'écoulement convient tout autant à la variante à un seul compteur qu'à la variante à deux compteurs.

Cet indicateur 107 est monté dans une ouverture 76 agencé dans la paroi 56A de façon étanche grâce aux joints d'étanchéité 82. Dans le tronçon A règne une pression PA et dans le tronçon B règne une pression PB.

L'indicateur 107 comporte un boîtier fixe constitué de plusieurs parties rendues solidaires 30 à 35 et comportant essentiellement une partie tubulaire 30 à 33 dont l'orifice central est fermé par deux parties 34, 35, ces pièces étant maintenues par les dispositifs non visibles du type boulons.

Dans cet orifice central, est logé un organe coulissant cylindrique constitué de deux parties 36, 37 solidarisées par exemple par une goupille 83. Le coulissement de cet organe 36, 37 est provoqué lorsqu'une des pressions PA ou PB est supérieure à l'autre, entraîne l'ouverture d'un passage de l'un des tronçons A ou B vers l'autre et actionne un organe de détection du sens d'écoulement du gaz entre les tronçons A, B.

Pour ce faire, l'organe coulissant 36, 37 est relié à une membrane élastique 38 annulaire l'entourant et solidaire du boîtier, cette membrane étant coincée entre les différentes parties de l'organe coulissant et du boîtier 30 et 31. Un passage 39 pratiqué dan le boîtier communique avec le tronçon A et débouche dans une chambre fermée 40 agencée dans le boîtier sur une face de la membrane 38 et un passage 41 de l'autre côté communique avec le tronçon B et débouche dans une chambre fermée 42 sur l'autre face de la membrane 38. Un jeu suffisant étant prévu entre l'organe coulissant et les parties 34 et 35 du boîtier, l'organe coulissant peut être déplacé dans le boîtier sur une certaine longueur.

Le boîtier et l'organe coulissant 36, 37 sont pourvus d'orifices 43 à 47 agencés de telle sorte que, lorsque l'organe 36, 37 est coulissé par l'intermédiaire de la membrane 38 dans un sens, le gaz peut passer dans le même sens d'un tronçon à l'autre. Ceci sera mieux décrit plus loin.

L'organe coulissant 36, 37 supporte deux tiges 48, 49 traversant le boîtier 34, 35 et fixées à l'organe coulissant 36, 37 par vissage dans des écrous 84, 85 pourvus d'orifices traversants 45A, 45B, chacune des tiges 48, 49 faisant saillie dans un des tronçons A, B et actionnant un micro interrupteur 80, 81 de détection.

Tel que représenté sur la figure 3, les pressions PA et PB dans les tronçons A et B sont égales et l'indicateur 107 est en position fermée, le gaz ne pouvant passer d'un des tronçons à l'autre, même si les valves d'isolement 9A et 9B sont ouvertes. Des filtres 77 A, 77B sont disposés derrière ces valves 9A et 9B.

Supposons, que la pression PB devienne supérieure à la pression PA, c'est-à-dire dans le cas de notre application qu'une fuite apparaisse à gauche de la paroi 56A représentée. L'indicateur 107 prend alors la position représentée sur la figure 4.

La différence de pression dans les chambres 40 et 42 de part et d'autre de la membrane 38 entraîne son déplacement vers la gauche. Elle entraîne dans ce déplacement l'organe coulissant 36, 37 et libère ainsi un passage entre les deux tronçons A et B. Le gaz peut ainsi s'écouler comme il est représenté par des flèches sur la figures 4. Le gaz s'écoule dans les orifices 47, dans le jeu ouvert entre l'organe coulissant et les parties du boîtier 34, 35 puis dans les orifices 45, 44 et 43.

Par ailleurs, les tiges 48, 49 sont également déplacées vers la gauche et la tige de gauche 48 vient commuter le micro interrupteur 80 qui transmet au microprocesseur 102 un signal transformé en signal lumineux transmis à la fibre optique 100' dont est équipé le tronçon A. Il peut ainsi être détecté sur un poste de contrôle externe le sens d'écoulement du gaz entre les deux tronçons A et B, cette indication étant exploitée selon le procédé décrit ci-après.

Comme représenté sur la figure 5, au moins un compteur de débit 112 permettant une alimentation en gaz est installé à une extrémité de modules 200 constitués de N tronçons. Le procédé de détection de fuite de gaz à l'aide de ce dispositif consiste à surveiller les compteurs de débit 112 de chaque module 200. En cas de nécessité de remplissage pour conserver le niveau de pression normal dans un module 200, le débit provenant de l'alimentation 112A est anormalement augmenté. Le procédé consiste alors à détecter les indications des indicateurs de direction d'écoulement 107 de ce module 200, le tronçon défaillant étant compris entre les deux indicateurs de direction d'écoulement 107 signalant une indication différente.

Les valves d'isolement 9A et 9B à chaque extrémité de ce tronçon défaillant sont alors fermées et par démontage des jonctions limitant ce tronçon, ce dernier peut être démonté sans perturber l'état des autres tronçons.

Selon le même procédé, un compteur relié à une alimentation en gaz diélectrique peut éventuellement être installé à chaque extrémité des modules.

De la même façon, un poste de contrôle 110 est installé à l'extrémité de chaque module 200 où les informations transmises par les fibres optiques 100(I) aboutées sont traitées et les ordres de commande adéquats transmis.

En cas de détection d'un défaut dans le tronçon 100(I), le signal lumineux correspondant, différencié par longueur d'onde ou niveau d'émission, et traité par le microprocesseur 102(I) est transmis au poste de contrôle 110, ce signal étant associé à un signal d'identification du tronçon. Le tronçon défectueux est ainsi localisé et en cas de nécessité de travaux ou de démontage de ce tronçon, l'ordre de fermetures des valves d'isolement est envoyé.

Le gaz du tronçon peut être vidé par la vanne 72. Une fois les travaux effectués ou le tronçon remplacé, il peut être rempli de gaz diélectrique individuellement par la vanne 71.

## Revendications

1. Indicateur d'écoulement de gaz destiné à être utilisé entre un tronçon (A) où règne une pression PA et un tronçon (B) où règne une pression PB, caractérisé en ce qu'il est monté dans une ouverture (76) traversant une paroi (56A) séparant les deux tronçons et en ce qu'il comporte un boîtier fixe (30 à 35) et un organe coulissant (36, 37) dans ce boîtier, le coulissement de cet organe (36, 37) étant provoqué lorsqu'une des pressions PA ou PB est supérieure à l'autre, entraînant l'ouverture d'un passage de l'un des tronçons (A ou B) vers l'autre et actionnant un organe de détection du sens d'écoulement du gaz entre les tronçons (A, B).

2. Indicateur selon la revendication 1, caractérisé en ce que l'organe coulissant (36, 37) est cylindrique relié à une membrane élastique (38) annulaire l'entourant et solidaire du boîtier, un passage (39) communiquant avec le tronçon (A) débouchant dans une chambre fermée (40) sur une face de la membrane (38) et un passage (41) communiquant avec l'autre tronçon (B) débouchant dans une chambre fermée (42) sur l'autre face de la membrane (38).

3. Indicateur selon la revendication 2, caractérisé en ce que le boîtier et l'organe coulissant (36, 37) sont pourvus d'orifices (43 à 47) agencés de telle sorte que, lorsque l'organe (36, 37) est coulissé par l'intermédiaire de la membrane (38) dans un sens, le gaz peut passer dans le même sens d'un tronçon à l'autre.

4. Indicateur selon la revendication 1, 2 ou 3, caractérisé en ce que l'organe coulissant (36, 37) supporte deux tiges (48, 49) traversant le boîtier, chacune faisant saillie dans un des tronçons (A, B) et actionnant un micro interrupteur (80, 81) de détection.

5. Dispositif de détection de fuite de gaz pour une ligne blindée isolée au gaz sous pression comprenant une pluralité de tronçons (1), deux tronçons (1) adjacents étant séparés par une jonction permettant le démontage d'un tronçon (1), caractérisé en ce que
un compteur de débit (112) installé à au moins une extrémité de modules (200) constitués de N tronçons (1) est relié à une alimentation en gaz (112A),
un indicateur d'écoulement de gaz selon l'une des revendications 1 à 4 est installé sur chaque tronçon.

6. Procédé de détection de fuite de gaz à l'aide d'un dispositif selon la revendication 5, caractérisée en ce qu'il consiste
à surveiller le(s) compteur(s) de débit (112) de chaque module (200) et, en cas de lecture d'une augmentation anormale du débit provenant de l'alimentation (112A) dans un module (200),
à détecter les indications des indicateurs d'écoulement de ce module (200), le tronçon (1) défaillant étant compris entre les deux indicateurs d'écoulement signalant une indication différente.

## Claims

1. Gas flow indicator for use between a section (A) at a pressure PA and a section (B) at a pressure PB, characterized in that it is mounted in an opening (76) through a wall (56A) separating the two sections and in that it includes a fixed box (30 to 35) and a sliding member (36, 37) in the box, the member (36, 37) being caused to slide if one of the pressures PA or PB is greater than the other, so opening a passage from one of the sections (A or B) to the other and actuating a device for detecting the direction of flow of the gas between the sections (A, B).

2. Indicator according to claim 1 characterized in that the sliding member (36, 37) is cylindrical and is joined to an angular elastic membrane (38) surrounding it and attached to the box, a passage (39) communicating with the section (A) opening into a closed chamber (40) on one side of the membrane (38) and a passage (41) communicating with the other section (B) opening into a closed chamber (42) on the other side of the membrane (38).

3. Indicator according to claim 2 characterized in that the box and the sliding member (36, 37) have openings (43 to 47) such that when the member (36, 37) is caused to slide by the membrane (38) in one direction the gas can flow from one section to the other in the same direction.

4. Indicator according to claim 1 or claim 2 or claim 3 characterized in that the sliding member (36, 37) supports two rods (48, 49) passing through the box, each projecting into one of the sections (A, B) and being adapted to actuate a detector microswitch (80, 81).

5. Gas leak detector device for a pressurized gas insulated screened line comprising a plurality of sections (1), two adjacent sections (1) being separated by a junction enabling demounting of a section (1), characterized in that
a flowmeter (112) installed at one end at least of modules (200) constituted of N sections (1) is connected to a gas supply (112A),
a gas flow indicator according to any one of claims 1 to 4 is installed on each section.

6. Method of detecting gas leaks using a device according to claim 5 characterized in that it consists in
monitoring the flowmeters (112) of each module and, on reading an abnormal increase in the flowrate from the supply (112A) into a module (200),
detecting the indications of the flow indicators of the module (200), the faulty section (1) being between the two flow indicators giving a different indication.

## Patentansprüche

1. Gasstromanzeigevorrichtung zur Verwendung zwischen einem Abschnitt (A), wo ein Druck PA herrscht, und einem Abschnitt (B), wo ein Druck PB herrscht, dadurch gekennzeichnet, daß sie in einer Öffnung (76) montiert ist, die eine Wand (56A) durchquert, die die zwei Abschnitte voneinander trennt, und daß sie ein festes Gehäuse (30 bis 35) und ein in diesem Gehäuse verschiebbares Organ (36, 37) umfaßt, wobei die Verschiebung dieses Organs (36, 37) dann hervorgerufen wird, wenn einer der Drücke PA oder PB größer ist als der andere, das Öffnen eines Durchgangs von einem der Abschnitte (A oder B) zu dem anderen antreibt und ein organ zur Erfassung der Richtung des Stromes des Gases zwischen den Abschnitten (A, B) betätigt.

2. Anzeigevorrichtung nach Anspruch 1, dadurch gekennzeichnet, daß das verschiebbare Organ (36, 37) zylindrisch und mit einer es umgebenden und mit dem Gehäuse fest verbundenen ringförmigen elastischen Membran (38) verbunden ist, wobei ein Durchgang (39), der mit dem Abschnitt (A) in Verbindung steht, in eine abgeschlossene Kammer (40) auf einer Seite der Membran (38) führt, und ein Durchgang (41), der mit dem anderen Abschnitt (B) in Verbindung steht, in eine abgeschlossene Kammer (42) auf der anderen Seite der Membran (38) führt.

3. Anzeigevorrichtung nach Anspruch 2, dadurch gekennzeichnet, daß Gehäuse und das verschiebbare Organ (36, 37) mit Öffnungen (43 bis 47) versehen sind, die so eingerichtet sind, daß, wenn das Organ (36, 37) durch die Membran (38) in eine Richtung verschoben ist, das Gas in die gleiche Richtung von einem Abschnitt zum anderen passieren kann.

4. Anzeigevorrichtung nach Anspruch 1, 2 oder 3, dadurch gekennzeichnet, daß das verschiebbare Organ (36, 37) zwei Stangen (48, 49) trägt, die das Gehäuse durchqueren, wobei jede in einen der Abschnitte (A, B) hineinragt und einen Erfassungs-Mikroschalter (80, 81) betätigt.

5. Vorrichtung zur Erfassung von Gasaustritt für eine druckgasisolierte, abgeschirmte Leitung, die eine Mehrzahl von Abschnitten (1) umfaßt, wobei zwei benachbarte Abschnitte (1) durch eine Verbindung getrennt sind, die eine Demontage eines Abschnitts ermöglicht, dadurch gekennzeichnet, daß
ein Durchflußzähler (112), der zumindest an einem Ende von aus N Abschnitten (1) bestehenden Modulen (200) angeordnet ist, an eine Gasversorgung (112A) angeschlossen ist,
eine Gasstromanzeigevorrichtung nach einem der Ansprüche 1 bis 4 an jedem Abschnitt angeordnet ist.

6. Verfahren zur Erfassung von Gasaustritt mit Hilfe einer Vorrichtung nach Anspruch 5, dadurch gekennzeichnet, daß es darin besteht,
den/die Durchflußzähler (112) eines jeden Moduls (200) zu überwachen und bei Ablesen einer anomalen Erhöhung des von der Versorgung (112A) kommenden Durchflusses in einem Modul (200)
die Angaben der Gasstromanzeigevorrichtungen dieses Moduls (200) zu erfassen, wobei der funktionsgestörte Abschnitt (1) zwischen zwei Gasstromanzeigevorrichtungen liegt, die eine unterschiedliche Angabe liefern.
